# EUROPÄISCHE PATENTSCHRIFT

(11) **EP 2 914 778 B1**
(45) Veröffentlichungstag und Bekanntmachung des Hinweises auf die Patenterteilung: **29.08.2018**
(21) Anmeldenummer: 13791770.4
(22) Anmeldetag: 05.11.2013
(51) Int. Cl.: E01H 1/05

(54) **KEHRMASCHINE ZUM BEARBEITEN VON BODENFLÄCHEN, INSBESONDERE RASENFLÄCHEN**
SWEEPING MACHINE FOR PROCESSING GROUND SURFACES, IN PARTICULAR LAWN SURFACES
BALAYEUSE POUR LE TRAITEMENT DE SOLS, EN PARTICULIER DE SURFACES GAZONNÉES

(30) Priorität: 05.11.2012 DE 202012010494 U
(43) Veröffentlichungstag der Anmeldung: 09.09.2015
(60) Teilanmeldung: 18173285.0
(73) Patentinhaber: Redexim Handel- en Exploitatie Maatschappij B.V., 3702 AC Zeist (NL)
(72) Erfinder: DE BREE, Cornelius Hermanus Maria, NL-3971 Driebergen (NL)
(74) Vertreter: dompatent von Kreisler Selting Werner - Partnerschaft von Patent- und Rechtsanwälten mbB
(86) Internationale Anmeldenummer: PCT/EP2013/073039
(87) Internationale Veröffentlichungsnummer: WO 2014/068140

(56) Entgegenhaltungen:
- DE-A1- 3 517 079
- FR-A- 344 579
- US-A- 220 252
- US-A- 2 259 724
- US-A- 2 732 573

## Beschreibung

Die Erfindung betrifft eine Kehrmaschine zum Bearbeiten von Bodenflächen nach dem Oberbegriff des Anspruchs 1, sowie ein Verfahren zum Kehren von Bodenflächen nach dem Oberbegriff des Anspruchs 8. Es sind Kehrmaschinen zum Bearbeiten von Bodenflächen bekannt, die einen in Fahrtrichtung bewegbaren Maschinenrahmen aufweisen, in dem zumindest eine Radachse mit mindestens einem Rad quer zur Fahrtrichtung gelagert ist, die den Maschinenrahmen parallel zur Bodenfläche trägt. Die Kehrmaschine weist mindestens ein um eine Kehrelementachse rotierend antreibbares Kehrelement auf, wobei die Kehrelementachse parallel zur Bodenfläche verläuft und das Kehrelement in einer Betriebsstellung mit der Bodenfläche im Eingriff ist. FR 344 579 A beschreibt eine Kehrmaschine mit den Merkmalen des Oberbegriffs des Anspruchs 1. Bei den Kehrmaschinen besteht jedoch der Nachteil, dass insbesondere bei Kurvenfahrt das Kehrgut wie z. B. Blätter oder Sand zum kurvenäußeren Rand getragen werden und am kurvenäußeren Rand aus der Kehrmaschine herausgetragen werden.

Aufgabe der vorliegenden Erfindung ist es daher eine Kehrmaschine zu schaffen, die derart ausgestaltet ist, dass auch bei Kurvenfahrt das zu kehrende Gut nicht aus der Kehrmaschine herausgetragen wird.

Zur Lösung dieser Aufgabe dienen die Merkmale der Ansprüche 1 und 8. Die Erfindung sieht in vorteilhafter Weise vor, dass die Kehrelementachse des mindestens einen Kehrelements von einer ersten Betriebsstellung bei Geradeausfahrt in eine zweite Betriebsstellung bei Kurvenfahrt überführbar ist, in der die Kehrelementachse gegenüber der erste Betriebsstellung eine zur Kurveninnenseite hin verschwenkte Lage aufweist.
Dies hat den Vorteil, dass verhindert wird, dass das zu kehrenden Gut z. B. durch Zentrifugalkräfte zur Kurvenaußenseite hin transportiert wird und aus der Kehrmaschine heraus transportiert wird.
Die Kehrelementachse kann um eine im Wesentlichen vertikale Schwenkachse von der ersten Betriebsstellung in die zweite Betriebsstellung verschwenkbar sein.
Das Kehrelement kann eine Bürstenwalze, vorzugsweise eine Rundbürstenwalze sein.
Die vertikale Schwenkachse kann durch eine Lagerstelle an einem der freien Enden der Kehrelementachse verlaufen.

Es kann eine einzige Radachse vorgesehen sein, die im Maschinenrahmen gelagert ist.
Die mindestens eine Radachse kann das mindestens eine Kehrelement und/oder ein Getriebe antreiben.
Der Maschinenrahmen kann eine Ankopplungsvorrichtung für ein Zugfahrzeug aufweisen.
Es können zumindest zwei Kehrelemente vorgesehen sein, wobei vorzugsweise ein Kehrelement in Fahrtrichtung vor der Radachse und ein Kehrelement in Fahrtrichtung hinter der Radachse angeordnet ist.
Die Kehrelementachse des mindestens einen Kehrelements kann in der ersten Betriebsstellung parallel zu der mindestens einen Radachse angeordnet sein.
In der zweiten Betriebsstellung ist die Kehrelementachse vorzugsweise nicht parallel zu der Radachse angeordnet.
Die Kehrelementachse des mindestens einen Kehrelements kann im Wesentlichen in einer zur Bodenfläche parallelen Ebene verschwenkbar sein.

Die Kehrelementachse des mindestens einen Kehrelementes weist ein erstes und zweites gelagertes Ende auf, wobei zum Verschwenken der Kehrelementachse zumindest ein Ende relativ zu dem Maschinenrahmen über eine Einstelleinrichtung verstellbar ist.
Die Einstelleinrichtung kann manuell und/oder pneumatisch und/oder hydraulisch betätigbar sein.

Bei Kurvenfahrt verschwenkt das äußere Ende des mindestens einen Kehrelements in Bezug zu dem Rahmen in Fahrtrichtung nach vorne und/oder das kurveninnere Ende des mindestens einen Kehrelementes in Bezug zu dem Rahmen nach hinten.. Die Einstelleinrichtung für die mindestens eine Kehrelementachse ist in Abhängigkeit von dem Lenkeinschlag des Zugfahrzeugs oder einem Kurvenfahrtdetektorsignal eines Detektors an dem Maschinenrahmen automatisch ansteuerbar sein.
Die mindestens eine Kehrelementachse kann in einem inneren Rahmenelement des Maschinenrahmens gelagert sein, das relativ zu dem Maschinenrahmen derart höhenverstellbar ist, dass das Kehrelement in einer Transportstellung überführbar ist, in der das Kehrelement außer Eingriff mit der Bodenfläche ist.
Das innere Rahmenelement kann relativ zum Maschinenrahmen um eine zu der Radachse parallelen Achse oder um die Radachse verschwenkbar sein.
Das mindestens eine Kehrelement kann in der Betriebsstellung über ein Getriebe, insbesondere ein Riemenantrieb oder ein Kettengetriebe, mit der Radachse antriebsmäßig gekoppelt sein und in der Transportstellung zum Beispiel über eine Kupplung von der Radachse entkoppelbar sein.
Die Erfindung sieht ferner in vorteilhafterweise ein Verfahren zum Kehren von Bodenflächen, insbesondere Rasenflächen vor, wobei eine Kehrmaschine mit einem Fahrzeug in Fahrtrichtung bewegt wird, wobei die Kehrmaschine von mindestens einem Rad auf einer quer zur Fahrtrichtung verlaufenden Radachse der Kehrmaschine getragen wird, und die Bodenoberfläche mit mindestens einem im Wesentlichen parallel zur Radachse verlaufenden, um eine Kehrelementachse rotierend angetriebenen Kehrelement gekehrt wird. Das Kehrelement wird von einer ersten Betriebsstellung für Geradeausfahrt, in der sich die Kehrelementachse des Kehrelements in einer im Wesentlichen orthogonalen Lage zur Fahrtrichtung befindet, in eine zweite Betriebsstellung für Kurvenfahrt verschwenkt, in der die Kehrelementachse des Kehrelements in eine zur Kurveninnenseite hin verschwenkte Lage überführt wird.

Im Folgenden wird unter Bezugnahme auf die Zeichnungen ein Ausführungsbeispiel der Erfindung näher erläutert.
Es zeigen schematisch:
- Fig. 1: eine Kehrmaschine in der Seitenansicht,
- Fig. 2: die Kehrmaschine aus Fig. 1 in der Transportstellung,
- Fig. 3: die Kehrmaschine in Draufsicht,
- Fig. 4: die Kehrmaschine in der zweiten Betriebsstellung,
- Fig. 5: den Maschinenrahmen der Kehrmaschine,
- Fig. 6: den Maschinenrahmen der Kehrmaschine in Transportstellung,
- Fig. 7: eine hydraulische Einstelleinrichtung zum Verschwenken des Kehrelementes von der ersten in die zweite Betriebsstellung,
- Fig. 8: eine elektrische Einstelleinrichtung,
- Fig. 9: eine manuelle Einstelleinrichtung.

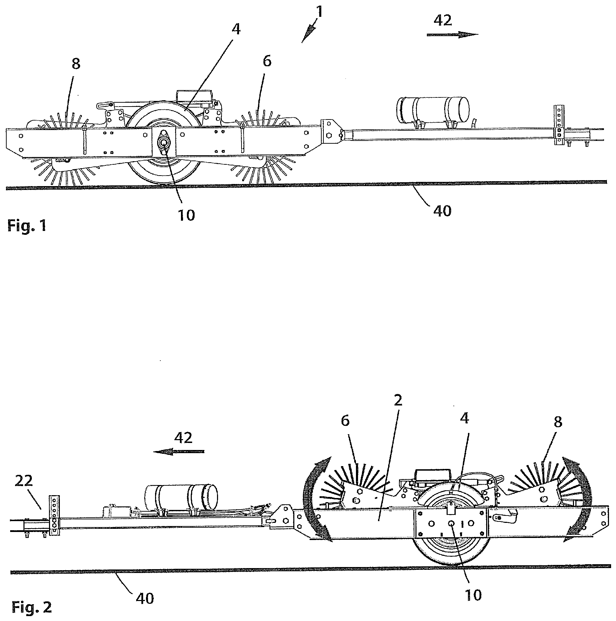

Fig. 1 zeigt eine Kehrmaschine 1 zum Bearbeiten einer Bodenfläche 40. Die Kehrmaschine 1 kann mit Hilfe eines nicht dargestellten Zugfahrzeugs in Fahrtrichtung 42 gezogen werden. Es ist eine Ankopplungsvorrichtung 22 für das Zugfahrzeug vorgesehen.

Die dargestellte Kehrmaschine weist einen Maschinenrahmen 2 auf, der mit Hilfe des Zugfahrzeugs in Fahrtrichtung 42 bewegbar ist. In dem Maschinenrahmen 2 ist eine Radachse 10 mit zwei Rädern 4 gelagert. Die Radachse 10 verläuft im Wesentlichen parallel zu der Bodenfläche 40. Die Radachse 10 trägt den Maschinenrahmen 2 im Wesentlichen parallel zur Bodenfläche 40. Beim Bewegen der Kehrmaschine in Fahrtrichtung 42 werden die Räder 4 gedreht. Durch Drehen der Räder 4 wird die Radachse 10 angetrieben.

Die Kehrmaschine weist vorzugsweise zwei um jeweils eine Kehrelementachse 12, 14 rotierend antreibbare Kehrelemente 6, 8 auf. Die Kehrelemente 6, 8 sind Bürstenwalzen. Die Kehrelementachsen 12, 14 verlaufen im Wesentlichen parallel zur Bodenfläche 40. In Fig. 1 sind die Kehrelemente in einer Betriebsstellung dargestellt, in der die Kehrelemente 6, 8 im Eingriff mit der Bodenfläche 40 sind und die Bodenfläche 40 kehren. Die Kehrelemente 6, 8 rotieren vorzugsweise entgegen der Drehrichtung der Räder 4. Alternativ können die Kehrelemente 6, 8 aber auch in derselben Richtung rotieren wie die Räder 4.

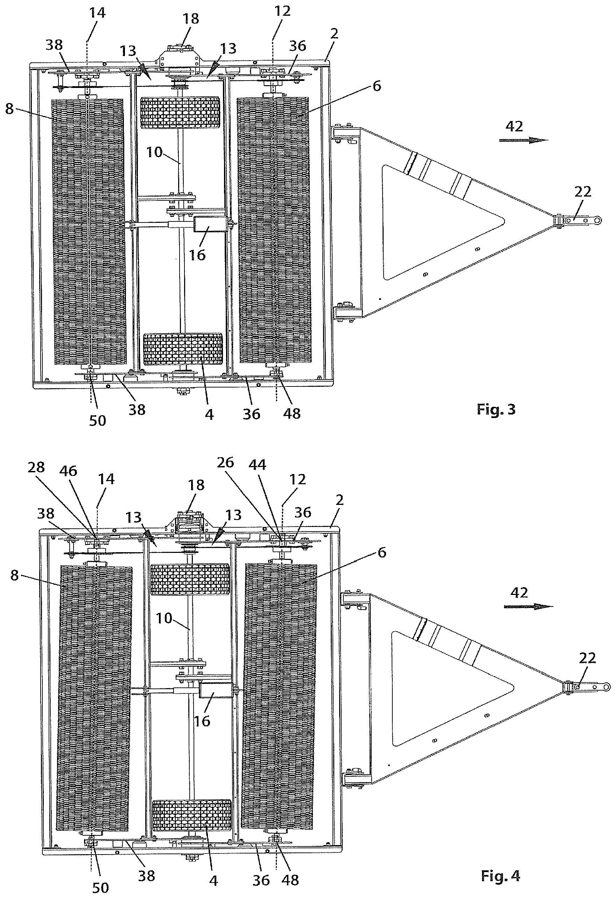

In der Betriebsstellung sind die Kehrelementachsen 6 und 8 mit der Radachse 10 gekoppelt. Dies ist in Fig. 3 dargestellt. Die Kopplung kann im dargestellten Fall über Getriebe 13, vorzugsweise Kettengetriebe oder Riemenantriebe, erfolgen. Im dargestellten Ausführungsbeispiel sind die Getriebe 13 Kettengetriebe. Durch Drehung der Radachse 10 und der Räder 4 können die Kehrelementachsen 12, 14 und somit die Kehrelemente 6 und 8 angetrieben werden.

Die Kehrelemente 6 und 8 sind mittels des Kolben-Zylinderelements 16 in eine Transportstellung verschwenkbar. Die Kehrelemente 6 und 8 in der Transportstellung sind in Fig. 2 dargestellt. In der Transportstellung berühren die Kehrelemente 6 und 8 die Bodenfläche 40 nicht und die Radachse 10 und die Kehrelementachsen 12 und 14 sind in der Transportstellung voneinander entkoppelt, so dass die Kehrelemente 6 und 8 in der Transportstellung nicht angetrieben sind. Durch das Verschwenken der Kehrelemente 6, 8 von der Betriebsstellung in die Transportstellung werden die Radachse 10 und die Kehrelementachsen 12, 14 voneinander entkoppelt. Dies geschieht mittels der Kupplung 18.

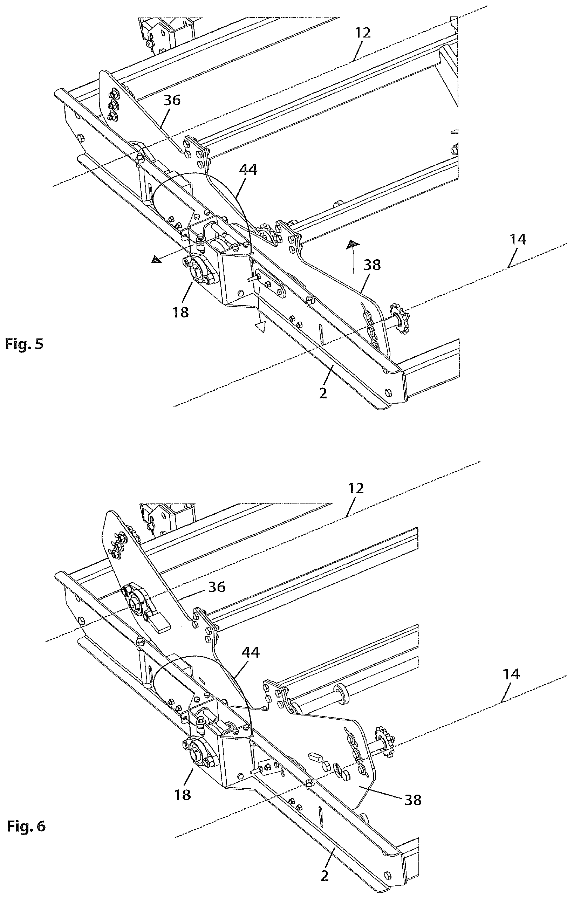

Das Verschwenken von der Betriebsstellung in die Transportstellung und das Entkoppeln kann i. V. m. Fig. 5 und 6 beschrieben werden. In Fig. 5 und 6 ist lediglich ein Teil des Maschinenrahmes 2 dargestellt. Der Maschinenrahmen 2 weist innere Rahmenelemente 36, 38 auf. Die Kehrelemente 6, 8 sind über die Kehrelementachsen 12, 14 jeweils beidseitig in einem der inneren Rahmenelemente 36, 38 gelagert. Die inneren Rahmenelemente 36, 38 sind an beiden Enden der Kehrelementachsen 12, 14 angeordnet. Die inneren Rahmenelemente 36, 38 können um eine Schwenkachse, die parallel zu der Radachse verläuft oder um die Radachse 10 verschwenkt werden.

Beim Verschwenken der inneren Rahmenelemente 36, 38 kann wie im dargestellten Ausführungsbeispiel ein Seilzugelement 44 betätigt werden, das wiederum die Kupplung 18 betätigt und die Radachse 10 von den Kehrelementachsen 12, 14 entkoppelt. Beim Verschwenken, d. h. beim Hochschwenken, von der Betriebsstellung in die Transportstellung wird über die Kupplung 18 die Radachse 10 von den Kehrelementachsen 12, 14 entkoppelt. Beim Verschwenken von der Transportstellung in die Betriebsstellung, d. h. beim Herabschwenken, wird über die Kupplung 18 die Radachse 10 wieder mit den Kehrelementachsen 12, 14 gekoppelt. Dies bedeutet, dass die Kehrelemente 6, 8 in der Transportstellung nicht angetrieben werden, wohingegen sie in der Betriebsstellung, in den die Kehrelemente 6, 8 die Bodenfläche 40 kehren, von der Radachse 10 angetrieben werden.

In Fig. 3 ist die Kehrmaschine 1 in der Draufsicht dargestellt. In Fig. 3 ist die Kehrmaschine in einer ersten Betriebsstellung dargestellt. In dieser ersten Betriebsstellung sind die Kehrelementachsen 12 und 14 parallel zu der Radachse 10 angeordnet und bei Geradeausfahrt orthogonal zu der Fahrtrichtung 42 angeordnet.

Die Kehrelementachsen 12, 14 der Kehrelemente 6, 8 können bei Kurvenfahrt in eine zweite Betriebsstellung in eine zur Kurveninnenseite hin verschwenkte Lage überführt werden. Die zweite Betriebsstellung ist in Fig. 4 dargestellt. Die Kehrelementachsen 12, 14 sind in eine zur Kurveninnenseite hin verschwenkte Lage überführt. Die Kurvenfahrtrichtung ist mit den Bezugszeichen 24 angegeben. Die Kehrelementachsen werden vorzugsweise um eine in Wesentliche vertikale Schwenkachse von der ersten Betriebsstellung in die zweite Betriebsstellung verschwenkt.

Die Kehrelementachsen 12, 14 weisen jeweils ein erstes Ende 44, 46 und jeweils ein zweites Ende 48, 50 auf, die in den inneren Rahmenelementen 36, 38 des Maschinenrahmens 2 gelagert sind. Dass die Kehrelementachsen 12, 14 zur Kurveninnenseite hin verschwenkt sind, bedeutet, dass die Kehrelemente 6, 8 in Kurvenrichtung stärker eingeschlagen sind. Dies bedeutet, dass das kurvenäußere Ende in Fahrtrichtung nach vorne und/oder das kurveninnere Ende in Fahrtrichtung nach hinten verschwenkt ist.

Die Kehrelementachsen 12, 14 der Kehrelemente 6, 8 können zum Verschwenken der Kehrelementachsen 12, 14 an dem ersten Ende 44, 46 und/oder an einem zweiten Ende 48, 50 relativ zu dem Maschinenrahmen 2 über eine Einstelleinrichtung verstellbar sein. Im dargestellten Ausführungsbeispiel werden die Kehrelementachsen 12, 14 an den jeweiligen zweiten Ende 48, 50 in Bezug zu dem Maschinenrahmen 2 in den inneren Rahmenelementen 36, 38 verstellt, so dass die Kehrelemente 6, 8 um eine Schwenkachse 26, 28, die jeweils in dem ersten Ende 44, 46 verlaufen, verschwenkt werden. Die Schwenkachsen 26, 28 verlaufen vorzugsweise im Wesentlichen vertikal, d. h. im Wesentlichen orthogonal zu der Bodenfläche 40.

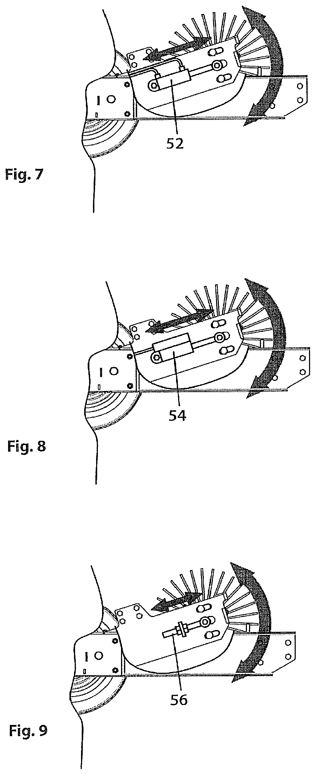

In Fig. 7 bis 9 sind unterschiedliche Einstelleinrichtungen 52, 54, 56 zum Verschwenken der Kehrelementsachsen 12, 14 dargestellt. In Fig. 7 ist eine hydraulische Einstelleinrichtung 52 dargestellt. In Fig. 8 ist eine elektrische Einstelleinrichtung dargestellt und in Fig. 9 ist eine manuelle Einstelleinrichtung dargestellt.

Die Kehrelemente 6 und 8 können bei Kurvenfahrt von der ersten Betriebsstellung in die zweite Betriebsstellung überführt werden. Alternativ können die Kehrelemente 6, 8 auch von der ersten Betriebsstellung zunächst in die Transportstellung überführt werden. Dann können die Einstelleinrichtungen 52, 54, 56 betätigt werden und die Kehrelementachsen 12, 14 können in Bezug zu den Rahmenelementen 36, 38 des Maschinenrahmens 2 verstellt werden. Die Kehrelemente 6, 8 können dann wieder in die Betriebsstellung abgelassen werden, wobei durch das Verstellen der Kehrelementachsen 12, 14 die Kehrelemente 6, 8 beim Herablassen in die zweite Betriebsstellung überführt werden, wobei die Kehrelemente 6, 8 eine zur Kurveninnenseite hin verschwenkte Lage aufweisen.

## Patentansprüche

1. Kehrmaschine (1) zum Bearbeiten von Bodenflächen (40), insbesondere Rasenflächen, mit
- einem in Fahrtrichtung bewegbaren Maschinenrahmen (2),
- mindestens eine in dem Maschinenrahmen (2) quer zur Fahrtrichtung gelagerte Radachse (10) mit mindestens einem Rad (4), wobei die Radachse (16) den Maschinenrahmen (2) parallel zur Bodenfläche (40) trägt,
- mindestens einem um eine Kehrelementachse (12,14) rotierend antreibbaren Kehrelement (6,8), wobei die Kehrelementachse (12,14) im Wesentlichen parallel zur Bodenfläche (40) verläuft und das Kehrelement (6,8) in einer Betriebsstellung mit der Bodenfläche (40) im Eingriff ist, wobei die Kehrelementachse (12,14) des mindestens einen Kehrelements (6,8) von einer ersten Betriebsstellung bei Geradeausfahrt in eine zweite Betriebsstellung bei Kurvenfahrt überführbar ist, in der die Kehrelementachse (12,14) eine zur Kurveninnenseite hin verschwenkte Lage aufweist,
**dadurch gekennzeichnet,**
**dass** die Kehrelementachse (12,14) des mindestens einen Kehrelementes (6,8) ein erstes und zweites gelagertes Ende aufweisen, wobei zum Verschwenken der Kehrelementachse (12,14) zumindest ein Ende relativ zu dem Maschinenrahmen (2) über eine Einstelleinrichtung (52, 54, 56) verstellbar ist wobei die Einstelleinrichtung (52, 54, 56) in Abhängigkeit von dem Lenkeinschlag eines Zugfahrzeugs oder einem Kurvenfahrtdetektorsignal eines Detektors an dem Maschinenrahmen derart automatisch ansteuerbar ist, dass bei Kurvenfahrt das kurvenäußere Ende des mindestens einen Kehrelements in Bezug zu dem Rahmen in Fahrrichtung nach vorne und/oder das kurveninnere Ende des mindestens einen Kehrelements in Bezug zu dem Rahmen nach hinten verschwenkt wird.

2. Kehrmaschine (1) nach Anspruch 1, **dadurch gekennzeichnet, dass** eine einzige Radachse (10) vorgesehen ist, die im Maschinenrahmen (2) gelagert ist.

3. Kehrmaschine (1) nach Anspruch 1 oder 2, **dadurch gekennzeichnet, dass** die mindestens eine Radachse (10) das mindestens eine Kehrelement (6,8) und/oder ein Getriebe (13) antreibt.

4. Kehrmaschine (1) nach einem der Ansprüche 1 bis 3, **dadurch gekennzeichnet, dass** zumindest zwei Kehrelemente (6,8) vorgesehen sind, wobei vorzugsweise ein Kehrelement in Fahrtrichtung vor der Radachse und ein Kehrelement in Fahrtrichtung hinter der Radachse angeordnet ist.

5. Kehrmaschine (1) nach einem der Ansprüche 1 bis 4, **dadurch gekennzeichnet, dass** die Kehrelementachse (12,14) um eine im Wesentlichen vertikale Schwenkachse von der ersten Betriebsstellung in die zweite Betriebsstellung verschwenkbar ist.

6. Kehrmaschine (1) nach einem der Ansprüche 1 bis 5, **dadurch gekennzeichnet, dass** die mindestens eine Kehrelementachse (12,14) in einem inneren Rahmenelement des Maschinenrahmens (2) gelagert ist, das relativ zu dem Maschinenrahmen (2) derart höhenverstellbar ist, dass das Kehrelement (6,8) in eine Transportstellung überführbar ist, in der das Kehrelement (6,8) außer Eingriff mit der Bodenfläche ist.

7. Kehrmaschine (1) nach einem der Ansprüche 1 bis 6, **dadurch gekennzeichnet, dass** das mindestens eine Kehrelement (6,8) in der Betriebsstellung über ein Getriebe, insbesondere ein Riemenantrieb oder ein Kettengetriebe, mit der Radachse antriebsmäßig gekoppelt ist und in der Transportstellung vorzugsweise über eine Kupplung von der Radachse entkoppelbar ist.

8. Verfahren zum Kehren von Bodenflächen, insbesondere Rasenfläche wobei
- eine Kehrmaschine (1) mit einem Fahrzeug in Fahrtrichtung bewegt wird, wobei
- die Kehrmaschine (1) von mindestens einem Rad (4) auf einer quer zur Fahrtrichtung verlaufenden Radachse (10) der Kehrmaschine (1) getragen wird, und
- die Bodenoberfläche mit mindestens einem im Wesentlichen parallel zur Radachse verlaufenden, um eine Kehrelementachse (12,14) rotierend angetriebenen Kehrelement (6,8) gekehrt wird, **dadurch gekennzeichnet, dass** das Kehrelement von einer ersten Betriebsstellung für Geradeausfahrt, in der sich die Kehrelementachse (12,14) des Kehrelements (6,8) in einer im Wesentlichen orthogonalen Lage zur Fahrtrichtung befindet, in eine zweite Betriebsstellung für Kurvenfahrt verschwenkt wird, in der die Kehrelementachse (12,14) des Kehrelements (6,8) in eine zur Kurveninnenseite hin verschwenkte Lage überführt wird.

## Claims

1. A sweeping machine (1) for working ground surfaces (40), in particular lawns, comprising
- a machine frame (2) adapted to be moved in the traveling direction,
- at least one wheel axle (10) with at least one wheel (4), said wheel axle being supported in the machine frame (2) transversely to the traveling direction, said wheel axle (10) supporting the machine frame (2) parallel to the ground surface (40),
- a least one sweeping element (6, 8) adapted to be driven for rotation about a sweeping element axis (12, 14), said sweeping element axis (12, 14) extending substantially parallel to the ground surface (40), and said sweeping element (6, 8) being in contact with the ground surface (40) when in an operating position, wherein the sweeping element axis (12, 14) of the at least one sweeping element (6, 8) is adapted to be moved from a first operating position, assumed when travelling straight, to a second operating position, assumed when driving a curve, in which second position the sweeping element axis (12, 14) is in a position pivoted towards the inner side of the curve,
**characterized in**
**that** the sweeping element axis (12, 14) of the at least one sweeping element (6, 8) has a first and a second supported end, at least one end being adjustable with respect to the machine frame (2) by means of an adjusting means (52, 54, 56) in order to pivot the sweeping element axis (12, 14), wherein the adjusting means (52, 54, 56) is configured to be automatically adjusted based on the steering angle of a towing vehicle or on a curve travel detector signal from a detector provided on the machine frame such that, when driving a curve, the end of the at least one sweeping element, situated on the outer side of the curve, is adapted to be adjusted forward with respect to the frame, seen in the traveling direction, and/or the end of the at least one sweeping element, situated on the inner side of the curve, is adapted to be adjusted rearward with respect to the frame.

2. The sweeping machine (1) of claim 1, **characterized in that** a single wheel axle (10) is provided which is supported in the machine frame (2).

3. The sweeping machine (1) of claim 1 or 2, **characterized in that** the at least one wheel axle (10) drives said at least one sweeping element (6, 8) and/or a transmission (13).

4. The sweeping machine (1) of one of claims 1 to 3, **characterized in that** at least two sweeping elements (6, 8) are provided, one sweeping element preferably being arranged ahead of the wheel axle and one sweeping element being arranged behind the wheel axle, seen in the traveling direction.

5. The sweeping machine (1) of one of claims 1 to 4, **characterized in that** the sweeping element axis (12, 14) is pivotable from the first operating position to the second operating position about a substantially vertical pivot axis.

6. The sweeping machine (1) of one of claims 1 to 5, **characterized in that** the at least one sweeping element axis (12, 14) is supported in an inner frame element of the machine frame (2), which is vertically adjustable with respect to the machine frame (2) such that the sweeping element (6, 8) can be moved to a transport position in which the sweeping element (6, 8) is not in contact with the ground surface.

7. The sweeping machine (1) of one of claims 1 to 6, **characterized in that** in the operating position, the at least one sweeping element (6, 8) is drivingly coupled with the wheel axle via a transmission, in particular a belt drive or a chain drive, while in the transport position, the sweeping element is preferably adapted to be uncoupled from the wheel axle by means of a clutch.

8. A method for sweeping ground surfaces, in particular lawns, wherein
- a vehicle moves a sweeping machine (1) in the traveling direction, wherein
- the sweeping machine (1) is supported by at least one wheel (4) on a wheel axle (10) of the sweeping machine (1) that extends transversely to the traveling direction, and
- the ground surface is swept with at least one sweeping element (6, 8) extending substantially parallel to the wheel axle and driven to rotate about a sweeping element axis (12, 14), **characterized in that** the sweeping element is pivoted from a first operating position for straight travel, in which position the sweeping element axis (12, 14) of the sweeping element (6, 8) is in a substantially orthogonal position with respect to the traveling direction, to a second position for traveling curves, in which the sweeping element axis (12, 14) of the sweeping element (6, 8) is moved into a position pivoted towards the inner side of the curve.

## Revendications

1. Balayeuse (1) destinée au traitement de surfaces de sol (40), en particulier de pelouses, dotée
- d'un châssis de machine (2) mobile dans la direction de déplacement,
- d'au moins un essieu (10) disposé dans le châssis de machine (2) transversalement à la direction de déplacement, dotée d'au moins une roue (4), dans laquelle l'essieu (10) porte le châssis de machine (2) parallèlement à la surface de sol (40),
- d'au moins une pièce de balayage (6,8) pouvant être entraînée en rotation autour d'un axe de pièce de balayage (12, 14), dans laquelle l'axe de pièce de balayage (12, 14) est essentiellement parallèle à la surface de sol (40), et la pièce de balayage (6,8) est en prise avec la surface de sol (40) dans une position de fonctionnement, dans laquelle l'axe de pièce de balayage (12, 14) de l'au moins une pièce de balayage (6, 8) peut être déplacé depuis une première position de fonctionnement pour le déplacement en ligne droite vers une deuxième position de fonctionnement pour le déplacement en virage, l'axe de pièce de balayage (12, 14) comportant une position pivotée vers l'intérieur de la courbe du virage,
**caractérisée en ce que** l'axe de pièce de balayage (12, 14) de l'au moins une pièce de balayage (6, 8) comporte une première extrémité et une deuxième extrémité, dans laquelle au moins une extrémité est ajustable relativement au châssis de machine (2) par le biais d'un dispositif de réglage (52, 54, 56) afin de faire pivoter l'axe de pièce de balayage (12, 14), dans laquelle le dispositif de réglage (52, 54, 56) est commandable automatiquement en fonction d'une manoeuvre de braquage d'un véhicule tracteur ou d'un signal de détection de virage provenant d'un détecteur situé sur le châssis de machine, de sorte que lors d'un virage l'extrémité de l'au moins une pièce de balayage située vers l'extérieur de la courbe du virage peut être pivotée vers l'avant dans la direction de déplacement par rapport au châssis et/ou l'extrémité de l'au moins une pièce de balayage située vers l'intérieur de la courbe du virage peut être pivotée vers l'arrière par rapport au châssis.

2. Balayeuse (1) selon la revendication 1, **caractérisée en ce qu'**un unique essieu (10) est disposé dans le châssis de machine (2).

3. Balayeuse (1) selon la revendication 1 ou 2, **caractérisée en ce qu'**au moins un essieu (10) entraîne l'au moins une pièce de balayage (6, 8) et/ou une transmission (13).

4. Balayeuse (1) selon l'une des revendications 1 à 3, **caractérisée en ce qu'**au moins deux pièces de balayage (6, 8) sont prévues, dans laquelle une pièce de balayage est de préférence agencée en avant de l'essieu dans la direction de déplacement et une pièce de balayage est de préférence agencée en arrière de l'essieu dans la direction de déplacement.

5. Balayeuse (1) selon l'une des revendications 1 à 4, **caractérisée en ce que** l'axe de pièce de balayage (12, 14) peut pivoter autour d'un axe de pivot essentiellement vertical depuis la première position de fonctionnement vers la deuxième position de fonctionnement.

6. Balayeuse (1) selon l'une des revendications 1 à 5, **caractérisée en ce que** l'au moins un axe de pièce de balayage (12, 14) est disposé dans un élément de châssis interne du châssis de machine (2), réglable en hauteur relativement au châssis de machine (2) de sorte que la pièce de balayage (6, 8) peut être déplacée vers une position de transport où la pièce de balayage (6, 8) n'est pas en prise avec la surface de sol.

7. Balayeuse (1) selon l'une des revendications 1 à 6, **caractérisée en ce que** l'au moins une pièce de balayage (6, 8) est couplée cinématiquement dans la position de fonctionnement avec l'essieu au moyen d'une transmission, en particulier une courroie de transmission ou une chaîne de transmission, et peut être découplée de l'essieu de préférence au moyen d'un embrayage.

8. Procédé de balayage de surfaces de sol, en particulier de pelouse, dans lequel
- une balayeuse (1) est mue par un véhicule tracteur dans une direction de déplacement, dans lequel
- la balayeuse (1) est portée par au moins une roue (4) sur un essieu (10) de balayeuse transversale à la direction de déplacement, et
- la surface de sol est balayée par au moins une pièce de balayage (6, 8) essentiellement parallèle à l'essieu et entraînée en rotation autour d'un axe de pièce de balayage (12, 14), **caractérisé en ce que** l'élément de balayage peut pivoter depuis une première position de fonctionnement pour le déplacement en ligne droite, l'axe (12, 14) de la pièce de balayage (6, 8) étant essentiellement orthogonale à la direction de déplacement, vers une seconde position de fonctionnement pour le déplacement en virage, l'axe (12, 14) de la pièce de balayage (6, 8) étant déplacé dans une position pivotée vers l'intérieur de la courbe du virage.
